# EUROPÄISCHE PATENTSCHRIFT

(11) **EP 1 370 842 B1**
(45) Veröffentlichungstag und Bekanntmachung des Hinweises auf die Patenterteilung: **14.04.2010**
(21) Anmeldenummer: 02730039.1
(22) Anmeldetag: 21.03.2002
(51) Int. Cl.: G01L 5/22, B62D 1/10

(54) **TORSIONSMODUL EINER DREHMOMENTERFASSUNGSEINRICHTUNG**
TORSION MODULE OF A TORQUE DETECTION DEVICE
MODULE DE TORSION D'UN DISPOSITIF DE DETECTION DE COUPLE

(30) Priorität: 23.03.2001 DE 10114688
(43) Veröffentlichungstag der Anmeldung: 17.12.2003
(73) Patentinhaber: Leopold Kostal GmbH & Co. KG, 58507 Lüdenscheid (DE)
(72) Erfinder: NIEDING, Klaus, 58553 Halver (DE); BÖBEL, Ralf, 44269 Dortmund (DE); BLÄSING, Frank, 59457 Werl (DE)
(86) Internationale Anmeldenummer: PCT/EP2002/003164
(87) Internationale Veröffentlichungsnummer: WO 2002/077595

(56) Entgegenhaltungen:
- EP-A- 0 442 091
- FR-A- 2 774 348
- US-A- 2 403 952
- US-A- 3 620 073

## Beschreibung

Die Erfindung betrifft ein Torsionsmodul einer Drehmomenterfassungseinrichtung eines Lenksystems oder Lenkkraftunterstützungssystems eines Kraftfahrzeuges, umfassend ein an einem Lenkrad befestigbares Speichenrad mit einer Nabe und mit einem über Biegespeichen mit der Nabe verbundenen und konzentrisch zu der Nabe angeordneten Kranz.

In zunehmendem Maße werden elektrische Lenkkraftunterstützungssysteme in Kraftfahrzeugen eingesetzt. Für diese Systeme wird als Führungsgröße das auf das Lenkrad ausgeübte Drehmoment benötigt, so daß anhand des festgestellten Drehmomentes die gewünschte Lenkkraftunterstützung erfolgen kann. Zur Drehmomenterfassung wird ein Torsionsmodul benötigt, welches einen Drehwinkelversatz zwischen dem Lenkrad und der Lenkspindel bei Anlegen eines Drehmomentes gestattet. Als Torsionsmodul wird bei der in DE 27 34 182 beschriebenen Vorrichtung ein Körper eingesetzt, der aus zwei in axialer Richtung voneinander beabstandeten Ringen gebildet ist, die mit mehreren, mit gleichem Winkelabstand zueinander angeordneten Metallstreifen verbunden sind. Während der obere Ring drehfest mit dem Lenkrad verbunden ist, ist der untere Ring drehfest mit der Lenkspindel der Lenksäule verbunden. Bei Anliegen eines Drehmomentes am Lenkrad und somit auf dem oberen Ring unterliegen die Metallstreifen einer Torsion und sind daher einer Biegung unterworfen. Das Maß der Biegung der Metallstreifen gibt Aufschluß über das anliegende Drehmoment. Zur Erfassung dieser Größe sind an einigen Metallstreifen Dehnungsmeßstreifen angebracht, die an eine Auswerteeinheit angeschlossen sind. Als tatsächliches Torsionselement dienen beim Gegenstand dieses Dokumentes die die beiden axial mit Abstand zueinander angeordneten Ringe verbindenden Metallstreifen. Nachteilig bei dem Aufbau dieses Torsionsmodules ist die relativ große Bauhöhe in axialer Richtung. Gerade in dieser Richtung steht insbesondere bei modernen Kraftfahrzeugen nur ein sehr geringer Raum zur Verfügung. Nachteilig ist beim Gegenstand der DE 27 34 182 A1 ferner, daß Bewegungen des Lenkrades gegenüber der Lenkspindel in axialer Richtung ebenfalls eine Durchbiegung der Metallstreifen zur Folge haben, welche Durchbiegung auswerteseitig jedoch als am Lenkrad anliegendes Drehmoment erfaßt wird. Dementsprechend erfolgt eine Ansteuerung des Lenkkraftunterstützungssystems, ohne daß tatsächlich ein Drehmoment am Lenkrad anliegt. Daher eignet sich dieses System insbesondere nicht für einen Einsatz im Rahmen eines Lenksystems, bei dem eine tatsächliche Bewirkung des Rädereinschlages nur über ein beispielsweise elektrisches System erfolgt.

Es sind auch Torsionsmodule bekannt geworden, bei denen zwei Elemente konzentrisch zueinander angeordnet sind, wie beispielsweise in der DE 37 37 696 A1 beschrieben. Beim Gegenstand dieses Torsionsmoduls ist eine innenliegende Nabe über als Biegestäbe ausgebildete Speichen mit einem äußeren konzentrisch zur Nabe angeordneten Kranz verbunden. Axial von den beiden relativ zueinander bewegbaren Elementen - Nabe und Kranz - sind Verbindungsteile angeordnet, die die jeweilige Bewegung an jeweils einen Meßwertgeber übertragen, so daß nach dem Wirbelstromprinzip ein Drehversatz zwischen dem Kranz und der Nabe registriert werden kann. Auch die aus diesem Dokument bekannte Meßeinrichtung benötigt in axialer Richtung einen Einbauraum, der nicht immer zur Verfügung steht. Beim Gegenstand der DE 37 37 696 A1 ist das Torsionsmodul bzw. die daran gekoppelte Auswerteeinheit unempfindlich bzw. sehr viel unempfindlicher gegenüber axialen Bewegungen zwischen dem Lenkrad und der Lenkspindel. Zwar Biegen sich die Biegespeichen bei einer solchen Bewegung ebenfalls durch, jedoch wird durch die eingesetzten Meßwertaufnehmer eine solche Bewegung nicht zur Generierung eines Lenksignales führen.

Torsionsmodule sind auch zur Messung des Bremsmomentes bei einem Kraftfahrzeug eingesetzt worden, wie beispielsweise in DE 196 50 477 C1 beschrieben. Bei dem in diesem Dokument beschriebenen Torsionsmodul sind zur Erfassung eines Drehwinkelversatzes zwischen der Nabe und dem Kranz an den Biegespeichen Dehnungsmeßstreifen angeordnet. Zum Begrenzen des maximal möglichen Drehwinkelversatzes zwischen der Nabe und dem Kranz sind wechselweise zu den Biegespeichen von der Nabe abragende Anschlagspeichen vorgesehen, die in eine den maximalen Drehwinkelversatz begrenzende Ausnehmung des Kranzes eingreifen. Das Rad eines Kraftfahrzeuges ist an der Nabe befestigbar. Zu diesem Zweck ist der Kranz des Torsionsmoduls gegenüber der von der Nabe für die Reifen gebildeten Montagefläche zurückversetzt, damit nicht die Gefahr besteht, daß nach einer Montage eines Rades an den Anschlagspeichen der Nabe dieses an den Biegespeichen anliegt. Eine Begrenzung von axialen Bewegungen zwischen Nabe und Kranz ist bei der aus diesem Dokument bekannten Meßeinrichtung weder vorgesehen noch notwendig, da derartige Bewegungen zwischen der an dem Kranz angeordneten Bremsscheibe und der Nabe nicht auftreten.

Ausgehend von dem diskutierten Stand der Technik liegt der Erfindung daher die Aufgabe zugrunde, ein Torsionsmodul bereitzustellen, welches den Anforderungen hinsichtlich des benötigten Einbauraumes bei einer Drehmomenterfassungseinrichtung eines Lenksystems oder Lenkkraftunterstützungssystems genügt und bei dem ebenfalls eine Beaufschlagung des Lenkrades mit in axialen Richtungen wirkenden Kräften nicht zu Fehlinterpretationen führt.

Weitere Drehmomenterfassungseinrichtungen sind in US 2 403 952 und US 3 620 073 offenbart. Diese Aufgabe wird erfindungsgemäß dadurch gelöst, daß an zumindest einer Biegespeiche ein druck- oder dehnungsempfindlicher, elektrische Ausgangssignale generierender Meßwertaufnehmer an einem solchen Bereich einer Biegespeiche unmittelbar angeordnet ist, der bei einem Drehwinkelversatz zwischen dem Kranz und der Nabe einer Biegung unterworfen ist und daß wechselweise zu den Biegespeichen biegesteife Anschlagspeichen mit jeweils einem freien Ende radial von der Nabe abragend angeordnet sind und zumindest die freien Enden der Anschlagspeichen in eine Anschlaganordnung zum Verhindern einer meßtechnisch wirksamen Relativbewegung zwischen dem Kranz und der Nabe in axialer Richtung eingreifen.

Bei dem erfindungsgemäßen Torsionsmodul befinden sich die Meßwertaufnehmer im Gegensatz zum Gegenstand der DE 37 37 696 A1 unmittelbar an den Biegespeichen, so daß der benötigte axiale Einbauraum allein durch die Ausdehnung des Kranzes und der Biegespeichen in dieser Richtung bestimmt ist. Als Meßwertaufnehmer werden bevorzugt folienartig ausgebildete Dehnungsmeßstreifen eingesetzt, da diese besonders leicht in ihrer Handhabung sind. Angeschlossen sind die Dehnungsmeßstreifen an einer Auswerteeinheit, die jedoch nicht Teil des Torsionsmoduls zu sein braucht, sondern sich beispielsweise in einem Lenkrad- oder in einem Lenksäulenmodul befinden kann. Besonders vorteilhaft beim Gegenstand des beanspruchten Torsionsmoduls ist die konzentrische Anordnung zwischen dem beispielsweise als Ringkörper und somit die Nabe vollständig einschließenden Kranz und der Nabe, da dann diese drei Elemente im wesentlichen in einer Ebene befindlich angeordnet sind. Zur Vermeidung einer Fehlinterpretation von Meßwerten der Meßwertaufnehmer infolge einer Verbiegung der Biegespeichen durch eine axiale Relativbewegung zwischen dem Lenkrad und der Lenkspindel ist auf einfache Weise eine solche Durchbiegung der Biegespeichen in axialer Richtung durch Anordnen von Anschlägen entgegengewirkt. Derartige Anschläge können beispielsweise dadurch realisiert sein, daß wechselweise zu den Biegespeichen Anschlagspeichen von der Nabe radial abragend angeordnet sind, die mit ihrem freien Ende jeweils in eine Anschlaganordnung, gebildet aus zwei in axialer Richtung voneinander beabstandeten Anschlägen eingreifen, wobei die lichte Weite des Abstandsspaltes im wesentlichen der Materialstärke einer Anschlagspeiche entspricht. Auf einfache Weise lassen sich derartige Anschläge dadurch realisieren, daß beispielsweise an der Ober- und an der Unterseite des Kranzes ein Abstandsring angeordnet ist, der im Bereich eines jeden freien Endes einer Anschlagspeiche einen nach innen gerichteten Vorsprung trägt. Anstelle eines oder der beiden Ringe mit derartigen Vorsprüngen kann ein solcher Anschlag auch durch ein weiteres Element, beispielsweise die Bodenplatte eines Lenkrades gebildet sein.

Zur Bereitstellung einer Überlastsicherung ist es zweckmäßig, den möglichen Drehwinkelversatz zwischen der Nabe und dem Kranz ebenfalls durch Anschläge zu begrenzen. Zur Realisierung einer solchen Anschlaganordnung können beispielsweise von dem Kranz nach innen vorspringend zwei Wülste vorgesehen sein, wobei diese einen solchen Abstand voneinander aufweisen, daß darin das freie Ende einer Anschlagspeiche eingreifen kann, und zwar mit einem solchen Spiel, welches dem maximalen Drehwinkelversatz zwischen dem Kranz und der Nabe entspricht.

Besonders geeignet ist ein solches sehr flach bauendes Torsionsmodul für eine Anordnung in einem Lenkradmodul eines Lenkrades. Das Torsionsmodul kann bei dem Lenkradmodul das untere Element bilden, welches mit der Bodenplatte eines Lenkrades verbunden ist. Verbunden ist dann die Bodenplatte des Lenkrades mit dem Kranz, während die Nabe des Torsionsmoduls drehfest an der Lenkspindel einer Lenksäule befestigt ist. Die Auswerteeinheit zum Auslesen der Meßergebnisse der Meßwertaufnehmer, beispielsweise der Dehnungsstreifen befindet sich zweckmäßigerweise ebenfalls in dem Lenkradmodul, welches gleichzeitig Träger für eine Airbag-Einrichtung sein kann.

Nachfolgend wird die Erfindung anhand eines Ausführungsbeispieles unter Bezugnahme auf die beigefügten Figuren beschrieben. Es zeigen:
- **Fig. 1:**: Ein Lenkradmodul für das Lenkrad eines Kraftfahrzeuges nach Art einer Explosionsdarstellung mit einem Speichenrad als Torsionsmodul einer Drehmomenterfassungseinrichtung,
- **Fig. 2:**: Eine Schrägansicht von unten auf das Lenkradmodul der Figur 1,
- **Fig. 3:**: Einen Teilschnitt entlang der Linie A-B der Figur 2,
- **Fig. 4:**: Eine Schrägansicht des in ein Lenkrad eingesetzten Lenkradmoduls der Figur 1 nach Art einer Explosionsdarstellung und
- **Fig. 5:**: Eine vergrößerte Darstellung des Zentrums des Lenkrades gemäß einer weiteren Ausgestaltung.

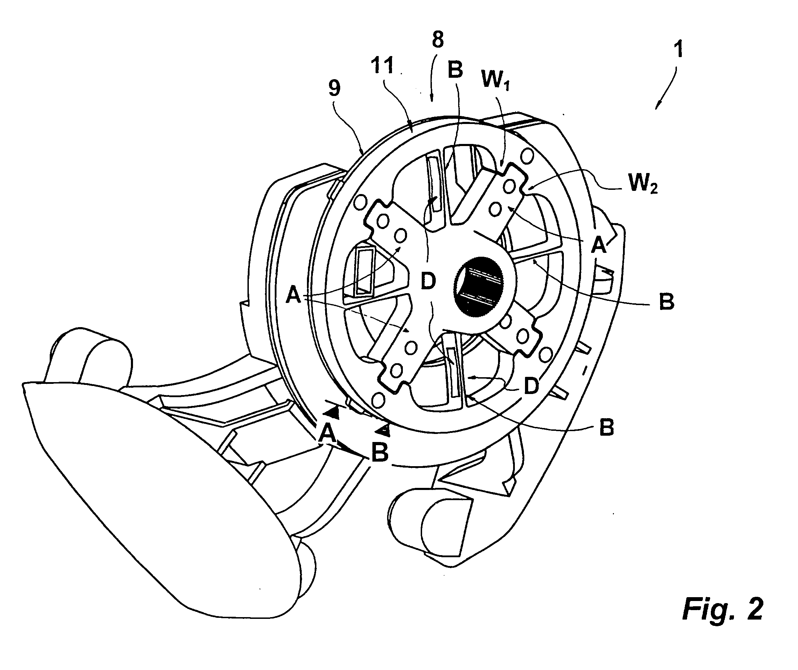

Ein Lenkradmodul 1 zum Ausrüsten eines Kraftfahrzeuges umfaßt einen Tragekörper 2 mit einem Gehäuse 3 und von dem Gehäuse 3 nach oben vorspringenden Tragarmanordnungen 4, 5, an denen oberseitig Aufnahmen für elektrische Schalter bzw. Schalteranordnungen angeordnet sind. Die Tragarmanordnungen 4, 5 sind ausgelegt, damit die von diesen gehaltenen zu bedienenden Baugruppen seitlich neben der Airbag-Abdeckung eines Lenkrades angeordnet sind. Eingesetzt in das Gehäuse 3 ist eine Platine 6 u.a. mit den zum Betreiben der elektrischen/elektronischen Baugruppen der Tragarmanordnung 4, 5 benötigten Leistungselektronik. Das Gehäuse 3 ist unterseitig durch eine untere Abdeckung 7 verschlossen. Den unteren Abschluß des Lenkradmoduls 1 bildet ein als Torsionsmodul für eine Drehmomenterfassungseinrichtung eingesetztes Speichenrad 8, welches durch einen Abstandsring 9 von der unteren Abdeckung 7 beabstandet ist. Das Speichenrad 8 umfaßt vier Biegespeichen, die eine Nabe 10 des Speichenrades 8 mit einem die Nabe 10 konzentrisch umgebenden Ringkörper 11 als Kranz verbinden. Die Nabe 10 weist einen Montagekanal 12 mit einer Vielverzahnung auf, welcher Montagekanal 12 zur Aufnahme des freien Endes einer Lenkspindel einer Lenksäule dient. Über die Nabe 10 ist das Speichenrad 8 drehfest mit der Lenkspindel einer Lenksäule verbunden. Im Wechsel mit den Biegespeichen B erstrecken sich radial von der Nabe 10 zusätzlich Anschlagspeichen A, die mit ihrem jeweils freien Ende in eine aus jeweils zwei Wülsten W₁, W₂ bestehende Anschlaganordnung eingreifen. Die Anschlagspeichen A dienen zur Begrenzung des maximalen Drehwinkelversatzes zwischen dem Ringkörper 11 und der Nabe 10. Die Biegespeichen B sind jeweils mit Dehnungsmeßstreifen D bestückt (vgl. Figur 2), über die eine Erfassung des Biegebetrages und somit eines relativen Drehwinkelversatzes zwischen dem Ringkörper 11 und der Nabe 10 erfolgt. Die Dehnungsmeßstreifen D sind in nicht dargestellter Art und Weise angeschlossen an eine Auswerteeinrichtung, die ebenfalls Teil des Lenkradmodules 1 ist.

Der Abstandsring 9 weist im Bereich seiner an die durch die Wülste W₁, W₂ gebildeten Anschlaganordnungen anliegenden Bereichen jeweils nach innen weisende Vorsprünge V auf, die an der Oberseite der Wülste W₁, W₂ jeweils anliegen und den durch die Wülste W₁, W₂ gebildeten Anschalgspalt überdecken. Entsprechend eingefaßt ist das freie Ende der Anschlagspeichen A auch unterseitig, entweder durch einen weiteren Ring 9' entsprechend dem Abstandsring 9 oder durch ein anderes Element, beispielsweise der Bodenplatte eines Lenkrades. Durch diese Einfassung der freien Enden der Anschlagspeichen A ist eine Relativbewegung zwischen der Nabe 10 und dem Ringkörper 11 in axialer Richtung begrenzt, so daß bei Einwirken axialer Kräfte und/oder bei Einwirken von Biegemomenten, die über den Lenkradkranz in das Speichenrad 8 eingeleitet werden, eine unzulässig große Biegung der Biegespeichen B nicht erfolgt. Dies dient dazu, die elastische Verformung des Federkörpers unter Einfluß von Mißbrauchskräften zu begrenzen und um Fehlinterpretationen der den Biegespeichen B zugeordneten Dehnungsmeßstreifen D zu vermeiden, die ansonsten auch bei einer solchen Relativbewegung ein eine Biegung einer Biegespeiche B wiedergebendes Meßsignal generiert wird.

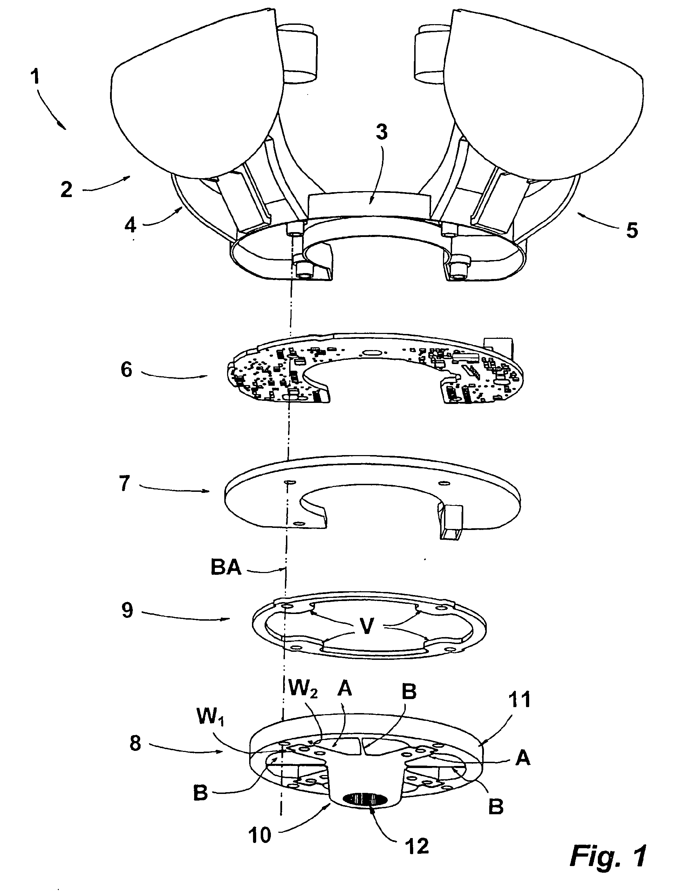

Die freien Enden der Anschlagspeichen A sind durch die Wülste W₁, W₂ in Drehrichtung mit Spiel anschlagbegrenzt und dienen als Überlastsicherung für die Biegespeichen B. In axialer Richtung sind die freien Enden der Anschlagsspeichen A dagegen möglichst eng eingefaßt, etwa durch die in Figur 1 gezeigten Vorsprünge V des Abstandsringes 9, 9'.

Sämtliche Elemente des Lenkradmodules - der Tragekörper 2, die Platine 6, die untere Abdeckung 7, der Abstandsring 9 und das Speichenrad 8 weisen vier miteinander jeweils fluchtende Bohrungen auf, so daß diese Elemente gemeinsam durch vier Befestigungsbolzen miteinander verbunden werden können. Eine dieser vier Befestigungsachsen ist in Figur 1 mit dem Bezugszeichen BA gekennzeichnet. Bei dem dargestellten Ausführungsbeispiel durchgreifen die Befestigungsschrauben die einzelnen Elemente des Lenkradmoduls 1 und sind mit ihrem Gewinde im Zentrum eines Lenkrades festgesetzt. Somit dient das dem Lenkradmodul 1 zugeordnete Speichenrad 8 zum Koppeln des Lenkrades an die Lenkspindel.

Die Darstellung der Figur 2 zeigt das Speichenrad 8 als unteren Teil des Lenkradmodules 1. Erkennbar ist in dieser Darstellung, daß zwei Biegespeichen B jeweils beidseitig mit Dehnungsmeßstreifen D ausgerüstet sind. Die Dehnungsmeßstreifen D sind in nicht dargestellter Art und Weise mit der Platine 6 in dem Gehäuse 3 des Lenkradmodules 1 verbunden. Die Anordnung von mehreren Dehnungsmeßstreifen D an zwei Biegespeichen B dient zur Erhöhung der Meßgenauigkeit durch Bereitstellen einer gewissen Informationsredundanz. Erkennbar in dieser Figur ist auch, daß die Anschlagspeichen A gegenüber den Biegespeichen B eine sehr viel größere Querschnittsfläche aufweisen und somit gegenüber den Biegespeichen B biegesteif sind.

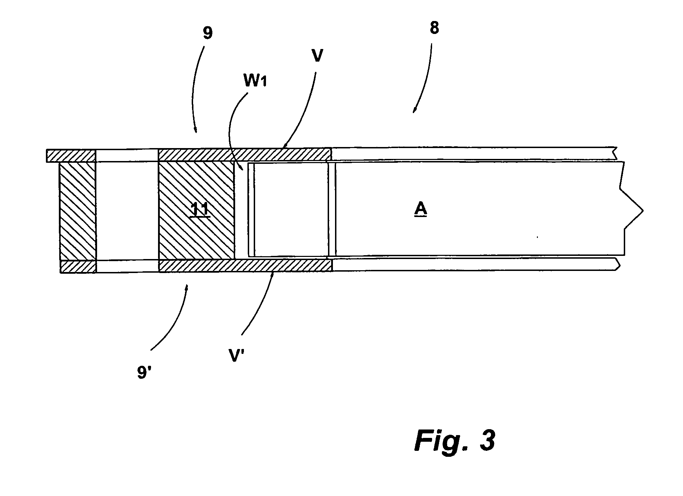

In dieser in Figur 2 gezeigten Darstellung des Speichenrades 3 als untersten Teil des Lenkradmodules 1 grenzt die Oberseite des Ringkörpers 11 an den Abstandsring 9, wodurch die freien Enden der Anschlagspeichen A von den von dem Abstandsring 9 nach innen vorspringenden Vorsprüngen V überdeckt sind. In einer Ausgestaltung ist unterseitig angrenzend an den Ringkörper 11 ein weiterer Abstandsring 9' (vgl. Figur 3) angeordnet, der gleichermaßen aufgebaut wie der Abstandsring 9 ist, der oberseitig an dem Ringkörper 11 anliegt.

In Figur 3 ist ein Schnitt durch eine solche durch die beiden Abstandsringe 9, 9' gebildete Anschlaganordnung gezeigt. Daraus ist zu erkennen, daß die Stärke einer Anschlagspeiche A zumindest im Bereich ihres freien Endes geringer ist als die Stärke des Ringkörpers 11. Dies ist vorgesehen, damit eine Relativbewegung zwischen dem Ringkörper 11 und der biegesteif mit der Nabe 10 verbundenen Anschlagspeiche A nicht beeinträchtigt ist. Das verbleibende Spiel zwischen der Ober- bzw. Unterseite der Anschlagspeiche A und den Vorsprüngen V bzw. V' der Abstandsringe 9 bzw. 9' ist so gering, daß eine Biegung einer Biegespeiche B in diesem Ausmaß nicht zur Generierung eines Signals führt.

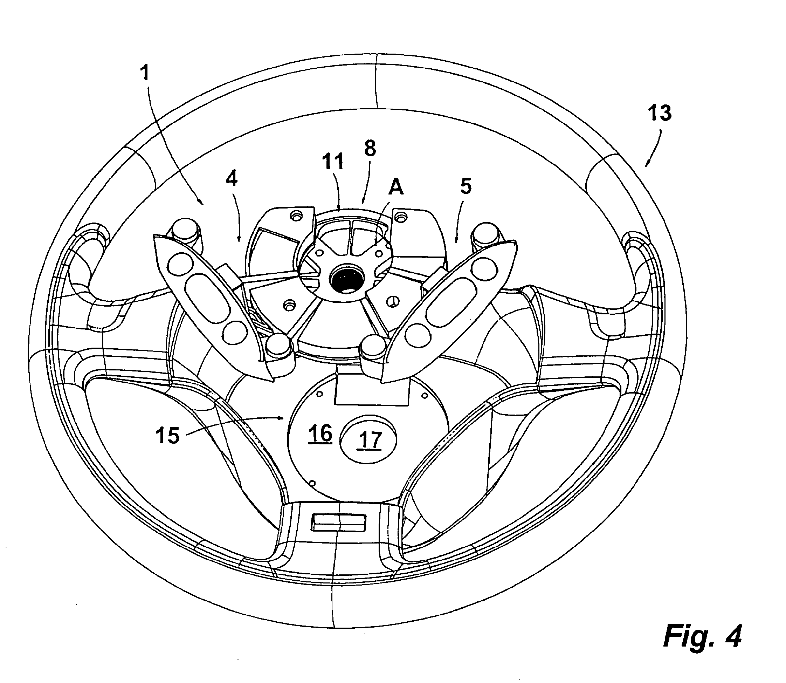

Das in Figur 4 gezeigte zusammengesetzte Lenkradmodul 1 ist axial fluchtend zu einem Lenkrad 13 angeordnet, in dem dieses im Zentrum 15 des Lenkrades 13 befestigt wird. Das Lenkradmodul 1 dient ebenfalls zur Aufnahme einer nicht dargestellten Airbag-Einrichtung, die im montierten Zustand zwischen den beiden Tragarmanordnungen 4, 5 mit den elektrischen Schaltern angeordnet ist. Das Zentrum 15 ist gebildet durch eine kreisförmige Vertiefung 16 mit einer zentralen Durchbrechung 17, durch die die Nabe 10 des Lenkradmodules 1 hindurchgreift. Erkennbar sind ferner Gewindebohrungen zum Einsetzen der Befestigungsschrauben zur Montage des Lenkradmodules 1 an dem Lenkrad 13. Die Oberseite der Vertiefung 16 liegt an der Unterseite des Ringkörpers 11 des Speichenrades 8 an, so daß durch diese Fläche der unter Anschlag für die Anschlagspeichen A des Speichenrades darstellen.

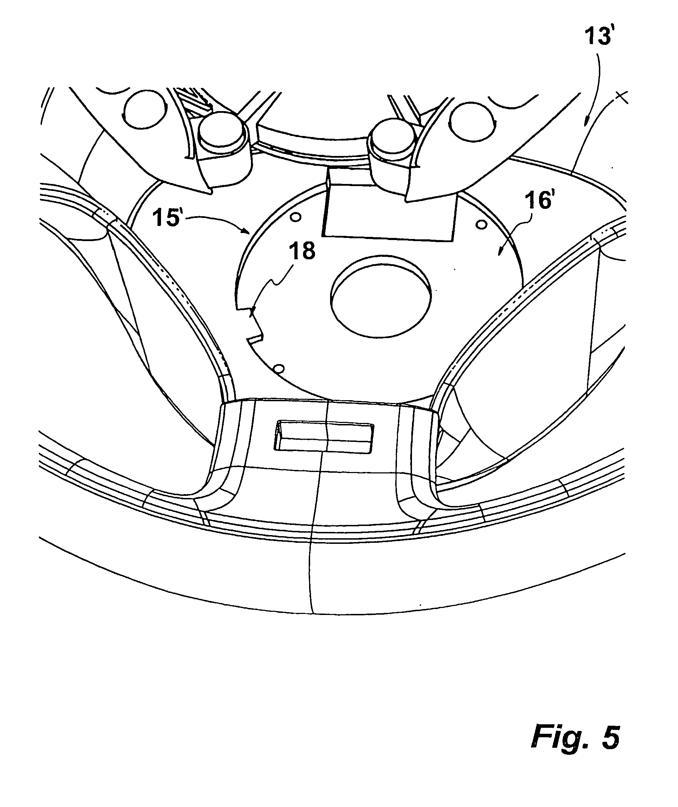

Figur 5 zeigt eine weitere Ausgestaltung eines Lenkrades 13', dessen Zentrum 15' prinzipiell aufgebaut ist wie das Zentrum 15 des Lenkrades 13. Im Unterschied zur Ausgestaltung der Vertiefung 16 des Lenkrades 13 weist die Vertiefung 16' des Lenkrades 13' nach innen nasenartig vorspringenden Drehmomentstützen 18 auf, von denen in der Figur 5 eine gezeigt ist. Insgesamt sind beispielsweise drei derartiger Drehmomentstützen umfänglich verteilt vorgesehen. Das in die Vertiefung 16' einzusetzende Speichenrad einer Drehmomenterfassungseinrichtung weist in dem äußeren Ringkörper eine komplementär ausgebildete Ausnehmung auf, so daß die Drehmomentstützen 18 formschlüssig in den Ringkörper eingreifen. Auf diese Weise wird die Qualität einer Verbindung, beispielsweise einer Schraubverbindung zwischen dem Lenkradboden und dem Speichenrad erhöht, da ein Gegeneinanderarbeiten dieser beiden Elemente durch den Formschluß der Drehmomentstützen 18 und dem Ringkörper des Speichenrades verhindert ist.

### Bezugszeichenliste

- 1: Lenkradmodul
- 2: Tragekörper
- 3: Gehäuse
- 4: Tragarmanordnung
- 5: Tragarmanordnung
- 6: Platine
- 7: untere Abdeckung
- 8: Speichenrad
- 9: Abstandsring
- 10: Nabe
- 11: Ringkörper
- 12: Montagekanal
- 13, 13': Lenkrad
- 15, 15': Zentrum
- 16, 16': Vertiefung
- 17: Durchbrechung
- 18: Drehmomentstütze

- A: Anschlagspeiche
- B: Biegespeiche
- BA: Befestigungsachse
- D: Dehnungsmeßstreifen
- V: Vorsprung
- W₁, W₂: Wulst

## Patentansprüche

1. Torsionsmodul einer Drehmomenterfassungseinrichtung eines Lenksystems oder Lenkkraftunterstützungssystems eines Kraftfahrzeuges, umfassend ein an einem Lenkrad befestigbares Speichenrad (8) mit einer Nabe (10) und mit einem über Biegespeichen (B) mit der Nabe (10) verbundenen und konzentrisch zu der Nabe (10) angeordneten Kranz (11), wobei an zumindest einer Biegespeiche (B) ein druck- oder dehnungsempfindlicher, elektrische Ausgangssignale generierender Meßwertaufnehmer (D) an einem solchen Bereich einer Biegespeiche (B) unmittelbar angeordnet ist, der bei einem Drehwinkelversatz zwischen dem Kranz (11) und der Nabe (10) einer Biegung unterworfen ist und daß wechselweise zu den Biegespeichen (B) biegesteife Anschlagspeichen (A) mit jeweils einem freien Ende radial von der Nabe (10) abragend angeordnet sind, **dadurch gekennzeichnet, daß** zumindest die freien Enden der Anschlagspeichen (A) in eine Anschlaganordnung (9, 9') zum Verhindern einer meßtechnisch wirksamen Relativbewegung zwischen dem Kranz (11) und der Nabe (10) in axialer Richtung eingreifen.

2. Torsionsmodul nach Anspruch 1, **dadurch gekennzeichnet, daß** als Meßwertaufnehmer Dehnungsstreifen (D) vorgesehen sind.

3. Torsionsmodul nach Anspruch 1 oder 2, **dadurch gekennzeichnet, daß** bei Einsatz mehrerer Dehnungsmeßstreifen (D) diese zumindest teilweise an unterschiedlichen Seiten unterschiedlicher Biegespeichen (B) angeordnet sind.

4. Torsionsmodul nach Anspruch 3, **dadurch gekennzeichnet, daß** der Kranz (11) und die Anschlagspeichen (A) in einer Ebene befindlich angeordnet sind sowie im wesentlichen dieselbe Ausdehnung in axialer Richtung aufweisen und daß die Anschlaganordnung durch jeweils einen an den Kranz (11) ober- und unterseitig, den Bereich der freien Enden der Anschlagspeichen (A) überdekkenden Anschlag ausgebildet ist.

5. Torsionsmodul nach Anspruch 4, **dadurch gekennzeichnet, daß** die Anschläge durch jeweils einen an den Kranz (11) angrenzenden Ring gebildet sind.

6. Torsionsmodul nach Anspruch 4, **dadurch gekennzeichnet, daß** zumindest einer der Anschläge durch ein weiteres Bauteil, beispielsweise die Bodenplatte eines Lenkrades (13, 13') gebildet ist.

7. Torsionsmodul nach einem der Ansprüche 1 bis 6, **dadurch gekennzeichnet, daß** wechselweise zu den Biegespeichen (B) biegesteife Anschlagspeichen (A) mit jeweils einem freien Ende radial von der Nabe (10) abragend angeordnet sind und die freien Enden der Anschlagspeichen (A) in eine Anschlaganordnung (W₁, W₂) eingreifen, durch die ein Drehwinkelversatz als Relativbewegung zwischen der Nabe (10) und dem Kranz begrenzt (11) ist.

8. Torsionsmodul nach Anspruch 6, **dadurch gekennzeichnet, daß** eine solche Anschlaganordnung durch zwei voneinander beabstandete und von dem Kranz (11) nach innen vorspringende, einen Anschlagspalt belassende Wülste (W₁, W₂) gebildet ist.

9. Torsionsmodul nach einem der Ansprüche 6 bis 8, **dadurch gekennzeichnet, daß** das Speichenrad in eine Vertiefung (16') eines Lenkrades (13') einsetzbar ist und diese Vertiefung zumindest einen nasenartigen, nach innen gerichteten Vorsprung als Drehmomentstütze (18) aufweist, die formschlüssig in den Kranz des Speichenrades eingreift.

## Claims

1. Torsion module of a torque detection device for a steering system or power assist steering system of a motor vehicle comprising a spoked wheel (8) which is attachable to a steering wheel with a hub (10) and with a rim (11) which is arranged concentrically to the hub (10) and is connected to the hub (10) by means of bending spokes (B), wherein a pressure- or strain-sensitive measuring sensor (D) generating electrical output signals is placed on at least one bending spoke (B), located immediately at such an section of a bending spoke (B) that is subjected to bending whenever there is a rotational angle displacement between the rim (11) and the hub (10), and that rigid limit stop spokes (A) are located alternately to the bending spokes (B) with their respective free ends projecting radially from the hub (10), **characterised in that** at least the free ends of the limit stop spokes (A) engage in a limit stop arrangement (9, 9') for the purpose of preventing any relative movement in the axial direction between the rim (11) and the hub (10) that would have an effect on the measurement.

2. Torsion module in accordance with Claim 1, **characterised in that** strain gauges (D) are provided as measuring sensors.

3. Torsion module in accordance with Claim 1 or Claim 2, **characterised in that** when several strain gauges (D) are implemented, these are at least partially located on different sides of different bending spokes (B).

4. Torsion module in accordance with Claim 3, **characterised in that** the rim (11) and the limit stop spokes (A) are located on one level and have essentially the same expansion in the axial direction, and that the limit stop arrangement is constituted by a respective limit stop on the upper and lower side of the rim (11) covering the area of the free ends of the limit stop spokes (A).

5. Torsion module in accordance with Claim 4, **characterised in that** the limit stops are constituted by a respective ring bordering on the rim (11).

6. Torsion module in accordance with Claim 4, **characterised in that** at least one of the limit stops is constituted by a further structural member, for instance the base plate of a steering wheel (13, 13').

7. Torsion module in accordance with any of Claims 1 to 6, **characterised in that** rigid limit stop spokes (A) alternate with the bending spokes (B) and are arranged so that a respective free end projects radially from the hub (10) and that the free ends of the limit stop spokes (A) engage in a limit stop arrangement (W₁, W₂) as a result of which a rotational angle displacement, being a relative movement between the hub (10) and the rim (11), is limited.

8. Torsion module in accordance with Claim 6, **characterised in that** such a limit stop arrangement is constituted by two bulges (W₁, W₂) that project inward from the rim (11) and are at a distance from each other, leaving a limit stop gap.

9. Torsion module in accordance with any of Claims 6 to 8, **characterised in that** the spoked wheel can be inserted into a recess (16') in a steering wheel (13') and that, as a torque support (18), this recess has at least one nose-like projection pointing inward which engages positively in the rim of the spoked wheel.

## Revendications

1. Module de torsion pour un dispositif de détection d'un couple de rotation d'un système de direction ou d'un système d'assistance à la direction d'un véhicule automobile, qui comprenant une roue à rayons (8), pouvant être fixée à un volant de direction, avec un moyeu (10) et avec une couronne (11) reliée au moyeu (10) , par l'intermédiaire de rayons flexibles (B), et disposée concentriquement par rapport audit moyeu (10), un capteur de valeurs de mesure (D) , sensible à la pression et à l'allongement et générant des signaux de sortie électriques, étant directement associé, à au moins à un rayon flexible (B), dans une telle zone d'un rayon flexible (B) , qui est soumis à une flexion lors d'un écart d'angle de rotation entre la couronne (11) et le moyeu (10), et des rayons de butée (A) résistants à la torsion, dont chacun présente une extrémité libre en saillie radiale par rapport au moyeu (10), étant disposés en alternance avec les rayons flexibles (B), **caractérisé en ce que** les extrémités libres des rayons de butée (A), au moins, s'engagent dans un agencement de butées (9, 9') pour empêcher un mouvement relatif, influençant le système de mesure, entre la couronne (11) et le moyeu (10), dans la direction axiale.

2. Module de torsion selon la revendication 1, **caractérisé en ce que** des extensomètres (D) sont prévus en tant que capteurs de valeurs de mesure.

3. Module de torsion selon revendication 1 ou 2, **caractérisé en ce que,** lors de la mise en oeuvre de plusieurs extensomètres (D), ceux-ci sont disposés, au moins partiellement, sur des côtés différents de rayons flexibles (B) différents.

4. Module de torsion selon la revendication 3, **caractérisé en ce que** la couronne (11) et les rayons de butée (A) sont disposés dans un plan et présentent sensiblement la même longueur dans la direction axiale, et que l'agencement de butées est formé par des butées, qui, sur la couronne (11), recouvrent chacune. respectivement côté supérieur et côté inférieur, la zone des extrémités libres des rayons de butée (A).

5. Module de torsion selon la revendication 4, **caractérisé en ce que** les butées sont formées, chacune, par une bague adjacente à la couronne (11).

6. Module de torsion selon la revendication 4, **caractérisé en ce que** l'une des butées au moins est formée par un autre élément, comme, par exemple, la plaque de base d'un volant de direction (13, 13').

7. Module de torsion selon l'une des revendications 1 à 6, **caractérisé en ce que** des rayons de butée (A) résistants à la torsion, dont chacun présente une extrémité libre en saillie radiale par rapport au moyeu (10), sont disposés en alternance avec les rayons flexibles (B), et que les extrémités libres des rayons de butée (A) s'engagent dans un agencement de butées (W₁, W₂), par lequel un décalage d'angle de rotation est limité, en tant que mouvement relatif entre le moyeu (10) et la couronne (11).

8. Module de torsion selon la revendication 6, **caractérisé en ce qu'**un tel agencement de butées est formé par deux renflements (W₁, W₂), qui, écartés l'un de l'autre et faisant saillie vers l'intérieur par rapport à la couronne (11), laissent une fente de butée.

9. Module de torsion selon l'une des revendications 6 à 8, **caractérisé en ce que** la roue à rayons peut être insérée dans une cavité (16') d'un volant de direction (13'), et que cette cavité présente, en tant qu'organe de résistance au couple (18), au moins une saillie en forme de nez, orientée vers l'intérieur, qui s'emboîte dans la couronne de la roue à rayons.
